# EUROPÄISCHE PATENTSCHRIFT

(11) **EP 0 801 282 B1**
(45) Veröffentlichungstag und Bekanntmachung des Hinweises auf die Patenterteilung: **06.05.1998**
(21) Anmeldenummer: 95120510.3
(22) Anmeldetag: 23.12.1995
(51) Int. Cl.: F28C 1/14

(54) **Vorrichtung zur Wiederinbetriebnahme eines von mindestens zwei parallel zueinander geschalteten Wärmetauschern**
Apparatus for restarting one of at least two heat exchangers in parallel
Dispositif pour la remise en service d'un d'au-moins deux échangeurs de chaleur en parallèle

(43) Veröffentlichungstag der Anmeldung: 15.10.1997
(73) Patentinhaber: Balcke-Dürr GmbH, 40882 Ratingen (DE)
(72) Erfinder: Tesche, Walter, Dipl.-Ing., D-40822 Mettmann (DE)
(74) Vertreter: Stenger, Watzke & Ring Patentanwälte

(56) Entgegenhaltungen:
- EP-A- 0 641 979
- DE-A- 2 602 485
- FR-A- 2 284 848

## Beschreibung

Die Erfindung betrifft eine Vorrichtung zur Wiederinbetriebnahme eines von mindestens zwei parallel zueinander geschalteten Wärmetauschern, insbesondere eines Hybridkühlturms, die jeweils aus einem Trockenteil und einem kühlmittelseitig nachgeschalteten, geodätisch unterhalb des Trockenteils liegenden Naßteil bestehen, wobei die Rücklaufleitung jedes Trockenteils zur Erzeugung eines Kraftschlusses unter der Flüssigkeitsoberfläche in einer zur Atmosphäre offenen Verteilleitung des Naßteils mündet und die Wärmetauscher kühlmittelseitig parallel mittels jeweils einer Vorlaufleitung an eine einer Kreislaufpumpe nachgeschaltete Druckleitung angeschlossen und jeweils durch ein in ihrer Vorlaufleitung angeordnetes Kühlmittelventil absperrbar sind. Ein Hybridkühlturm dieser Art ist aus der EP-A-641 979 bekannt.

Derartige Hybridkühltürme werden zur Vermeidung bzw. Reduzierung von sichtbaren Wasserdampfemissionen (Schwaden) eingesetzt. Sie umfassen neben einem Naßteil mit offenem Wärmeaustausch zwischen dem zu kühlenden Medium, vorzugsweise Wasser, und der Kühlluft ein Trockenteil, das oberhalb der Wasserverteilung des Naßteils angeordnet ist. Die Wärmetauscher des Trockenteils werden als geschlossene Apparate ohne direkten Kontakt des Kühlmittels zur Kühlluft ausgeführt, beispielsweise als Röhren-, Rippenrohr- oder Plattenwärmetauscher. Das zu kühlende Medium wird zuerst dem gegenüber der Atmosphäre abgeschlossenen Trockenteil und danach dem gegenüber der Atmosphäre offenen Naßteil zugeleitet. Die dem Naßteil zugeführte und aus diesem mit Feuchtigkeit beladene Kühlluft wird mit der im Trockenteil erwärmten und damit relativ getrockneten Kühlluft vermischt, um sichtbare Wasserdampfemissionen, d.h. das Entstehen von Schwaden zu vermeiden, auf jeden Fall aber zu reduzieren. Während Trockenteil und Naßteil somit vom Kühlmittel nacheinander durchströmt werden, ergibt sich eine Parallelführung der Kühlluft einerseits durch den Trockenteil und andererseits durch den Naßteil.

Aufgrund der kühlmittelseitigen Hintereinanderschaltung von Trockenteil und Naßteil ist der Naßteil geodätisch unterhalb des Trockenteils angeordnet, um den aus dem Naßteil aufsteigenden, mit Feuchtigkeit beladenen Kühlluftteilstrom anschließend mit dem aus dem Trockenteil kommenden Kühlluftteilstrom zu vermischen. Zur Reduzierung der Pumpenenergie wird der Trockenteil üblicherweise im Kraftschluß mit dem Trockenteil betrieben, indem die Rücklaufleitung des Trockenteils in der zur Atmosphäre offenen Verteilleitung des Naßteils unterhalb der Flüssigkeitsfläche mündet. Hierdurch stellt sich am höchsten Punkt des hydraulischen Systems im Trockenteil ein Unterdruck ein. Dieser Unterdruck entspricht der geodätischen Überhöhung dieses höchstens Punktes des Trockenteils gegenüber der freien Flüssigkeitsoberfläche des Naßteils, jedoch vermindert um den dynamischen Druckverlust im Trockenteil, der als Vordruck von der Pumpe für das Kühlmittel aufgebracht werden muß.

Für größere Anlagen, insbesondere Hybridkühltürme werden Trockenteil und Naßteil auf eine Mehrzahl von parallel zueinander geschalteten Wärmetauschern verteilt, von denen jeder einzelne zwecks Leistungsregelung der Gesamtanlage oder zu Wartungs- oder Reparaturzwecken zeitweise abgeschaltet werden kann. Während bei der ersten Inbetriebnahme oder nach einem Gesamtstillstand die Pumpe aufgrund ihrer Betriebscharakteristik und der gleichartigen Ausführung aller Wärmetauscher das Kühlmittel gleichmäßig in alle Wärmetauscher pumpt, ist es bei der Wiederinbetriebnahme eines einzelnen Wärmetauschers erforderlich, dessen Trockenteil wieder dadurch mit Kühlmittel zu füllen, daß in diesem Trockenteil ein Unterdruck erzeugt wird. Durch die geodätische Lage des Trockenteils oberhalb des Naßteils und durch den kraftschlüssigen Betrieb füllt sich der Trockenteil eines beim Betrieb der übrigen Wärmetauscher wieder in Betrieb zu nehmenden Wärmetauschers nur bis zu einer Höhe, die der Flüssigkeitsoberfläche in der zur Atmosphäre offenen Verteilleitung zuzüglich einer Höhe, die sich aus dem dynamischen Druckverlust im Trockenteil ergibt, entspricht.

Da aufgrund der Abmessungen des Trockenteils der dynamische Druckverlust in diesem Trockenteil üblicherweise geringer als dessen geodätische Überhöhung ist, wird bei den bekannten Hybridkühltürmen mindestens eine, zugleich mehreren Wärmetauschern zugeordnete Evakuierungspumpe eingesetzt, die bei einer Wiederinbetriebnahme eines zeitweise abgeschalteten Wärmetauschers die Luft aus dessen Trockenteil absaugt, so daß dieser Trockenteil sich wieder vollständig mit Kühlmittel füllt. Diese Evakuierungspumpen sind jedoch nicht nur teuer und wartungsaufwendig, sondern benötigen entweder zusätzliche Windkessel oder mit größerem Querschnitt ausgeführte Leitungen für den Anschluß an sämtliche Wärmetauscher. Die Evakuierungspumpe und die zugehörigen Leitungen sowie ggf. Windkessel stellen somit eine große Investition und einen ständigen Wartungs- und Reparaturaufwand dar.

Der Erfindung liegt die **Aufgabe** zugrunde, eine Vorrichtung zu schaffen, mit der der für die Wiederinbetriebnahme von einzelnen Wärmetauschern erforderliche Investitions- und Wartungsaufwand minimiert werden kann.

Die **Lösung** dieser Aufgabenstellung durch die Erfindung ist dadurch gekennzeichnet, daß die Trockenteile sämtlicher Wärmetauscher an ihrer geodätisch höchsten Stelle unter Zwischenschaltung jeweils eines Absperrventils durch eine vakuumdichte Verbindungsleitung miteinander verbunden sind.

Durch die Heranziehung des an der höchsten Stelle der in Betrieb befindlichen Wärmetauscher existierenden Unterdruckes zur Absaugung der im Trockenteil des wieder in Betrieb zu nehmenden Wärmetauschers vorhandenen Luft, und zwar aufgrund der Injektorwirkung des in den Rücklaufleitungen der in Betrieb befindlichen Wärmetauscher strömenden Kühlmittels, kann die aufwendige Installation einer wartungsintensiven Evakuierungspumpe sowie der hiermit verbundenen voluminösen Rohrleitungen und der erforderlichen Meß- und Regeltechnik entfallen. Damit erübrigt sich auch eine Wartung dieser Anlagenteile, die nur erforderlich waren, um eine Wiederinbetriebnahme eines zeitweise abgeschalteten Wärmetauschers bei andauerndem Betrieb der anderen, parallel geschalteten Wärmetauscher zu ermöglichen. Die anstelle dieser Anlagenteile erfindungsgemäß vorgesehene Verbindungsleitung, die die Trockenteile sämtlicher Wärmetauscher an ihrer geodätisch höchsten Stelle unter Zwischenschaltung jeweils eines Absperrventils vakuumdicht miteinander verbindet, erfordert nur einen sehr geringen Aufwand.

Zur Wiederinbetriebnahme eines zeitweise abgeschalteten Wärmetauschers wird nach Öffnen des in der Vorlaufleitung angeordneten Kühlmittelventils auch das zum befüllenden Trockenteil gehörende Absperrventil des wieder in Betrieb zu nehmenden Wärmetauschers und mindestens das Absperrventil eines der in Betrieb befindlichen Wärmetauscher geöffnet. Hierdurch wird aufgrund der Injektorwirkung des in der Rücklaufleitung des in Betrieb befindlichen Wärmetauschers strömenden Kühlmittels im Trockenteil des in Betrieb zu nehmenden Wärmetauschers ein Unterdruck erzeugt, durch den die Luft aus diesem Trockenteil in die Rücklaufleitung des in Betrieb befindlichen Wärmetauschers gesaugt wird. Auf diese Weise strömt solange Kühlmittel in den Trockenteil des wieder in Betrieb zu nehmenden Wärmetauschers bis dieser vollständig gefüllt ist und über einen Ablauf des Kühlmittels in den nachgeschalteten Naßteil der erforderliche Kraftschluß erzeugt wird, der für eine vollständige Inbetriebnahme erforderlich ist. Sobald dieser Kraftschluß vorliegt, können die Absperrventile in der Verbindungsleitung wieder geschlossen werden.

Damit die Heranziehung des Unterdruckes an der höchsten Stelle der in Betrieb befindlichen Wärmetauscher zur Absaugung der in dem wieder in Betrieb zu nehmenden Wärmetauscher vorhandenen Luft nicht zu einer Unterbrechung des Kraftschlusses in den im Betrieb befindlichen Wärmetauschern führt, wird die Drosselwirkung der Verbindungsleitung und/oder der Absperrventile derart ausgelegt, daß selbst im ungünstigsten Fall eine Kraftschlußunterbrechung ausgeschlossen ist.

Mit der erfindungsgemäßen Vorrichtung wird somit die Möglichkeit geschaffen, einen von mindestens zwei parallel zueinander geschalteten Wärmetauschern insbesondere eines Hybridkühlturmes wieder in Betrieb zu nehmen, ohne daß es hierfür einer aufwendigen zusätzlichen Evakuierungseinrichtung bedarf, die außer einem hohen Investitions- und einem nicht unbeträchtlichen Wartungsaufwand auch einen beachtlichen Energieeinsatz erfordert.

Auf der Zeichnung ist ein Ausführungsbeispiel eines Hybridkühlturmes dargestellt, anhand dessen die zugehörige Vorrichtung erläutert werden soll. Auf der Zeichnung zeigt:
- Fig. 1: eine Prinzipskizze eines Hybridkühlturmes und
- Fig. 2: ein Ausführungsbeispiel der erfindungsgemäßen Vorrichtung zur Wiederinbetriebnahme eines zeitweise abgeschalteten Wärmetauschers.

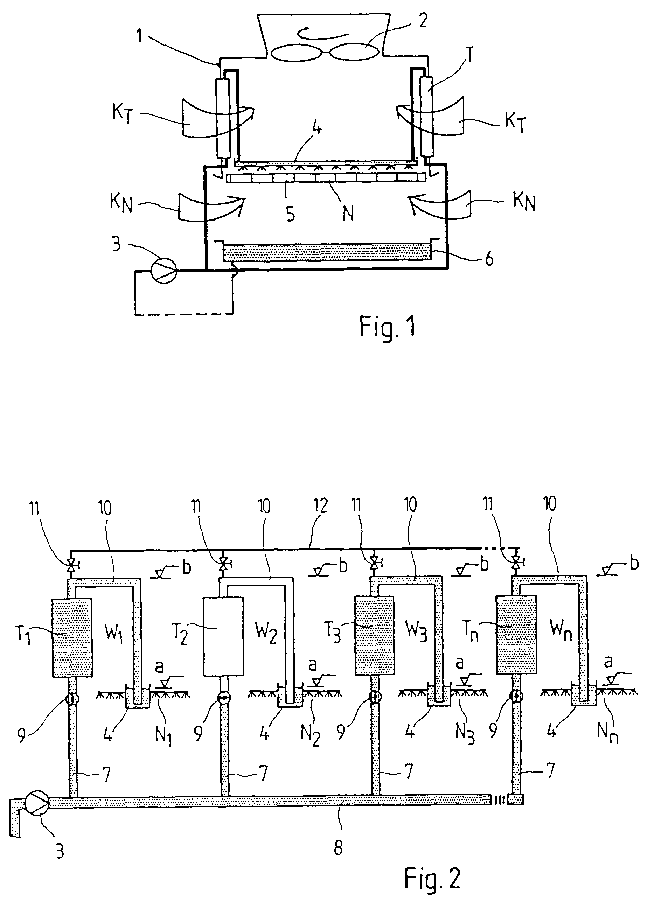

Der schematisch in einem senkrechten Schnitt in Fig. 1 dargestellte Hybridkühlturm umfaßt einen Naßteil N und einen Trockenteil T, die in einem gemeinsamen Gehäuse 1 angeordnet sind, das beim dargestellten Ausführungsbeispiel durch einen Ventilator 2 zwangsbelüftet wird. Das zu kühlende Wasser wird durch eine Kreislaufpumpe 3 zuerst dem Trockenteil T zugeführt und gelangt anschließend in eine Verteilleitung 4 des Naßteils N. Über Sprühdüsen wird das Wasser auf Rieseleinbauten 5 des Naßteils N aufgegeben, aus denen es in eine Sammeltasse 6 abtropft. Aus dieser Sammeltasse 6 wird das gekühlte Wasser wieder dem Kreislauf des Kraftwerks zugeführt.

Während Trockenteil T und Naßteil N des Hybridkühlturms kühlmittelseitig hintereinander geschaltet sind, werden die durch Pfeile in Fig. 1 symbolisierten Teilströme der Kühlluft K parallel zueinander geführt. Der den Naßteil N im wesentlichen im Gegenstrom zum Wasser durchströmende Kühlluftteilstrom K_{N}, gelangt mit Feuchtigkeit beladen in den Mischraum des Gehäuses 1 und wird hier mit dem Kühlluftteilstrom K_{T} vermischt, der den oberhalb der Verteilleitung 4 des Naßteils N angeordneten Trockenteil T im wesentlichen im Querstrom durchströmt. Durch die Mischung der im Naßteil N erwärmten und mit Feuchtigkeit beladenen Luft des Kühlturmteilstroms K_{N} mit der im Trockenteil T erwärmten und hierdurch hinsichtlich der relativen Feuchtigkeit getrockneten Luft des Kühlturmteilstroms K_{T} wird das Entstehen eines sichtbaren Kühlturmschwadens vermieden.

Wie aus Fig. 2 hervorgeht, sind Naßteil N und Trockenteil T des Hybridkühlturms auf eine Mehrzahl von Wärmetauschern W₁ bis Wₙ verteilt. Die Wärmetauscher W₁ bis Wₙ sind parallel zueinander geschaltet und bestehen jeweils aus einem Naßteil N₁ bis Nₙ sowie einem Trockenteil T₁ bis Tₙ.

Wie aus Fig. 2 weiterhin hervorgeht, ist jeder Trockenteil T₁ bis Tₙ über eine Vorlaufleitung 7 an eine Druckleitung 8 angeschlossen, die der Kreislaufpumpe 3 nachgeschaltet ist. In jeder Druckleitung 8 ist ein Kühlmittelventil 9 angeordnet, durch welches jeder Trockenteil T₁ bis Tₙ absperrbar ist. Über eine Rücklaufleitung 10 steht jedes Trockenteil T₁ bis Tₙ mit der zur Atmosphäre offenen Verteilleitung 4 des kühlmittelseitig nachgeschalteten Naßteils N₁ bis Nₙ in Verbindung, wobei die Rücklaufleitungen 10 zur Erzeugung eines Kraftschlusses unterhalb der Oberfläche des sich in der Verteilleitung 4 ausbildenden Flüssigkeitsstandes münden.

Bei der ersten Inbetriebnahme des Hybridkühlturmes und bei der Inbetriebnahme der Wärmetauscher W₁ bis Wₙ nach einem Gesamtstillstand des Hybridkühlturmes drückt die Kreislaufpumpe 3 aufgrund ihrer Betriebscharakteristik und der gleichartigen Ausführung aller Wärmetauscher W₁ bis Wₙ das Kühlmedium gleichmäßig über die Druckleitung 8 und die Vorlaufleitungen 7 in die Trockenteile T₁ bis Tₙ sämtlicher Wärmetauscher W₁ bis Wₙ, und zwar bis zum höchsten Punkt der Trockenteile T₁ bis Tₙ, der in Fig. 2 durch den Punkt b gekennzeichnet ist. Für diese Gesamtfüllung muß die Kreislaufpumpe 3 zusätzlich zur Förderhöhe bis zum freien Wasserspiegel der Naßteile N₁ bis Nₙ, der in Fig. 2 durch den Punkt a gekennzeichnet ist, auch noch die Förderhöhe bis zum höchsten Punkt b des Trockenteils T₁ bis Tₙ sowie den dynamischen Druckverlust der Trockenteile T₁ bis Tₙ aufbringen. Sobald das Kühlmedium über die Rücklaufleitungen 7 in die gegenüber der Atmosphäre offene Verteilleitung 4 der Naßteile N₁ bis Nₙ gelangt, baut sich ein Kraftschluß auf, so daß anschließend die Kreislaufpumpe 3 nur noch die Förderhöhe bis zur Wasserspiegelhöhe a der Naßteile N₁ bis Nₙ sowie den dynamischen Druckverlust sämtlicher Trockenteile T₁ bis Tₙ aufbringen muß.

Um die Leistung des Hybridkühlturms den jeweiligen Verhältnissen anzupassen oder um Wartungs- oder Reparaturarbeiten an einzelnen Wärmetauschern W₁ bis Wₙ durchzuführen, können einzelne Wärmetaucher W₁ bis Wₙ zeitweise abgeschaltet werden. Zu diesem Zweck wird das Kühlmittelventil 9 in der jeweiligen Vorlaufleitung 7 geschlossen, wie dies beim Ausführungsbeispiel nach Fig. 2 hinsichtlich des Wärmetauschers W₂ dargestellt ist.

Wenn zum Zwecke der Leistungserhöhung oder nach Abschluß der Wartungs- oder Reparaturarbeiten der abgeschaltete Wärmetauscher W₂ wieder in Betrieb genommen werden soll, wird als erstes das Kühlmittelventil 9 geöffnet. Da der dynamische Druckverlust im Trockenteil T₂ des abgeschalteten Wärmetauschers W₂ geringer ist als der durch den geodätischen Höhenunterschied des höchsten Punktes b des Trockenteils T₂ gegenüber dem freien Wasserspiegel a des Naßteils N₂ bedingte Unterdruck, stellt sich im Trockenteil T₂ des wieder zugeschalteten Wärmetauschers W₂ lediglich eine Wassersäule bis zur Höhe des Vordruckes, d.h. bis zur Größe des dynamischen Druckverlustes ein.

Um die im Trockenteil T₂ des wieder in Betrieb zu nehmenden Wärmetauchers W₂ trotz Öffnen des Füllmittelventils 9 verbleibende Luft abzusaugen, wird der an der höchsten Stelle b zumindest eines in Betrieb befindlichen Wärmetauschers W₁, W₃ oder Wₙ bestehende Unterdruck ausgenutzt, um infolge der Injektorwirkung des in der jeweiligen Rücklaufleitung 10 strömenden Kühlmittels die Luft aus dem Trockenteil T₂ zu entfernen. Zu diesem Zweck sind die Trockenteile T₁ bis Tₙ sämtlicher Wärmetauscher W₁ bis Wₙ an ihrer geodätisch höchsten Stelle b unter Zwischenschaltung jeweils eines Absperrventils 11 durch eine vakuumdichte Verbindungsleitung 12 miteinander verbunden.

Durch Öffnen des zum Trockenteil T₂ gehörenden Absperrventils 11 und mindestens eines weiteren Absperrventils 11 eines der Trockenteile T₁ , T₃ und Tₙ saugt der sich infolge der Injektorwirkung des in der Rücklaufleitung 10 des jeweiligen Trockenteils T₁, T₃ oder Tₙ strömenden Kühlmittels über die Verbindungsleitung 12 Luft aus dem zu befüllenden Trockenteil T₂. Diese Luft wird über die Rücklaufleitungen 10 der in Betrieb befindliche Wärmetauscher W₁, W₃ bzw. Wₙ den nachgeschalteten Verteilleitungen 4 zugeführt. Auf diese Weise baut sich stetig Vakuum in dem wieder in Betrieb zu nehmenden Trockenteil T₂ des Wärmetauschers W₂ auf, so daß Kühlmedium bis zum höchsten Punkt b dieses Wärmetauschers W₂ aufsteigt. Sobald das Kühlmedium den höchsten Punkt b des Trockenteils T₂ erreicht hat und über die Rücklaufleitung 10 der Verteilleitung 4 zugeführt wird, ist der für den Betrieb des Wärmetauchers W₂ erforderliche Kraftschluß hergestellt. Die Wiederinbetriebnahme des Wärmetauschers W₂ ist beendet; die geöffneten Absperrventile 11 können geschlossen werden.

Damit durch das Öffnen eines oder mehrerer Absperrventile 11 keine Unterbrechung des Kraftschlusses in den im Betrieb befindlichen Wärmetauschern W₁,W₃ und Wₙ auftritt, wird die Drosselwirkung der Verbindungsleitung 12 und/oder der Absperrventile 11 derart ausgelegt, daß eine Unterbrechung des Kraftschlusses in den im Betrieb befindlichen Wärmetauschern ausgeschlossen ist.

### Bezugszeichenliste:

- 1: Gehäuse
- 2: Ventilator
- 3: Kreislaufpumpe
- 4: Verteilleitung
- 5: Rieseleinbau
- 6: Sammeltasse
- 7: Vorlaufleitung
- 8: Druckleitung
- 9: Kühlmittelventil
- 10: Rücklaufleitung
- 11: Absperrventil
- 12: Verbindungsleitung
- a: Wasserspiegelhöhe
- b: höchster Punkt
- K: Kühlluft
- K_{N}: Kühlluftteilstrom
- K_{T}: Kühlluftteilstrom
- N: Naßteil
- T: Trockenteil
- W: Wärmetauscher

## Patentansprüche

1. Vorrichtung zur Wiederinbetriebnahme eines von mindestens zwei parallel zueinander geschalteten Wärmetauschern (W₁ bis Wₙ), insbesondere eines Hybridkühlturms, die jeweils aus einem Trockenteil (T₁ bis Tₙ) und einem kühlmittelseitig nachgeschalteten, geodätisch unterhalb des Trockenteils (T₁ bis Tₙ) liegenden Naßteil (N₁ bis Nₙ) bestehen, wobei die Rücklaufleitung (10) jedes Trockenteils (T₁ bis Tₙ) zur Erzeugung eines Kraftschlusses unter der Flüssigkeitsoberfläche in einer zur Atmosphäre offenen Verteilleitung (4) des Naßteils (N₁ bis Nₙ) mündet und die Wärmetauscher (W₁ bis Wₙ) kühlmittelseitig parallel mittels jeweils einer Vorlaufleitung (7) an eine einer Kreislaufpumpe (3) nachgeschaltete Druckleitung (8) angeschlossen und jeweils durch ein in ihrer Vorlaufleitung (7) angeordnetes Kühlmittelventil (9) absperrbar sind, **dadurch gekennzeichnet,**
daß die Trockenteile (T₁ bis Tₙ) sämtlicher Wärmetauscher (W₁ bis Wₙ) an ihrer geodätisch höchsten Stelle (b) unter Zwischenschaltung jeweils eines Absperrventils (11) durch eine vakuumdichte Verbindungsleitung (12) miteinander verbunden sind.

2. Vorrichtung nach Anspruch 1, dadurch gekennzeichnet, daß die Drosselwirkung der Verbindungsleitung (12) und/oder der Absperrventile (11) derart ausgelegt ist, daß eine Unterbrechung des Kraftschlusses in den in Betrieb befindlichen Wärmetauschern (W₁ bis Wₙ) ausgeschlossen ist.

## Claims

1. Device for recommissioning one of at least two parallel-connected heat exchangers (W₁ to Wₙ), especially of a hybrid cooling tower, which each consist of a dry part (T₁ to Tₙ) and of a wet part (N₁ to Nₙ) located downstream on the coolant side and lying geodetically below the dry part (T₁ to Tₙ), the return conduit (10) of each drive part (T₁ to Tₙ) opening out under the liquid surface in a distributor conduit (4) of the wet part (N₁ to Nₙ), the said distributor conduit being open to the atmosphere, for the purpose of making a gravitational connection, and the heat exchangers (W₁ to Wₙ) being connected on the coolant side, in parallel, in each case by means of a supply conduit (7), to a delivery conduit (8) located downstream of a circulating pump (3) and being capable of being shut-off, in each case, by means of a coolant valve (9) arranged in their supply conduit (7), characterized in that the drive parts (T₁ to Tₙ) of all the heat exchangers (W₁ to Wₙ) are connected to one another at their geodetically highest point (b) by means of a vacuum-tight connecting conduit (12), with a shut-off valve (11) being interposed in each case.

2. Device according to Claim 1, characterized in that the throttle effect of the connecting conduit (12) and/or of the shut-off valve (11) is designed in such a way that an interruption in the gravitation in the heat exchangers (W₁ to Wₙ) which are in operation is ruled out.

## Revendications

1. Dispositif pour la remise en service d'un d'au moins deux échangeurs de chaleur montés en parallèle (W₁ à Wₙ), en particulier d'une tour de refroidissement hybride, qui se composent respectivement d'une partie sèche (T₁ à Tₙ) et d'une partie mouillée (N₁ à Nₙ) montée en aval côté réfrigérant de façon géodésique sous la partie sèche (T₁ à Tₙ), la canalisation de retour (10) de chaque partie sèche (T₁ à Tₙ) pour la production d'une adhérence sous la surface du fluide débouchant dans un conduit principal ascendant (4) ouvert à l'atmosphère de la partie mouillée (N₁ à Nₙ), et les échangeurs de chaleur (W₁ à Wₙ) étant connectés parallèlement côté réfrigérant à une conduite de refoulement (8) montée en aval d'une pompe de circulation (3) au moyen d'une canalisation montante (7) respective et pouvant être bloqués respectivement par une soupape à réfrigérant (9) disposée dans leur canalisation montante (7), caractérisé en ce que les parties sèches (T₁ à Tₙ) de l'ensemble des échangeurs de chaleur (W₁ à Wₙ) sont reliées entre elles au niveau de leur emplacement géodésiquement le plus élevé (b) par commutation intercalée d'une soupape d'arrêt (11) respective, au moyen d'une conduite de raccordement (12) étanche au vide.

2. Dispositif selon la revendication 1, caractérisé en ce que l'action d'étranglement de la conduite de raccordement (12) et/ou des soupapes d'arrêt (11) est conçue de telle sorte qu'une interruption de l'adhérence dans les échangeurs de chaleur (W₁ à Wₙ) à l'état de fonctionnement est exclue.
